# EUROPÄISCHE PATENTSCHRIFT

(11) **EP 3 308 062 B1**
(45) Veröffentlichungstag und Bekanntmachung des Hinweises auf die Patenterteilung: **28.11.2018**
(21) Anmeldenummer: 15771545.9
(22) Anmeldetag: 18.09.2015
(51) Int. Cl.: F16K 31/524

(54) **MECHANISCH BETÄTIGBARES VENTIL UND VERFAHREN ZU SEINER HERSTELLUNG**
MECHANICALLY ACTUATABLE VALVE AND METHOD FOR THE PRODUCTION THEREOF
SOUPAPE Ä ACTIONNEMENT MÉCANIQUE ET PROCÉDÉ DE FABRICATION DE LADITE SOUPAPE

(43) Veröffentlichungstag der Anmeldung: 18.04.2018
(73) Patentinhaber: Festo AG & Co. KG, 73734 Esslingen (DE)
(72) Erfinder: KÜHBAUCH, Heiko, 73257 Köngen (DE); STERNS, Frank, 71034 Böblingen (DE)
(74) Vertreter: Patentanwälte Magenbauer & Kollegen Partnerschaft mbB
(86) Internationale Anmeldenummer: PCT/EP2015/071432
(87) Internationale Veröffentlichungsnummer: WO 2017/045725

(56) Entgegenhaltungen:
- BE-A- 621 722
- DE-U- 1 721 502
- DE-U1- 8 436 606
- US-A- 3 013 532

## Beschreibung

Die Erfindung betrifft ein mechanisch betätigbares Ventil, mit einer Ventileinheit, die ein Ventilgehäuse aufweist und über eine unter Ausführung einer Umschaltbewegung bezüglich des Ventilgehäuses zwischen verschiedenen Schaltstellungen umschaltbare Ventilgliedanordnung verfügt, die mit einem Antriebsabschnitt aus dem Ventilgehäuse herausragt, und mit einer Betätigungseinrichtung, die mit einem eine Betriebsposition einnehmenden Lagersockel an eine Montagefläche außen am Ventilgehäuse angesetzt und mit dem Ventilgehäuse verschraubt ist und die ein bezüglich des Lagersockels bewegliches Betätigungselement aufweist, das mechanisch zu einer Arbeitsbewegung antreibbar ist, bei der es zum Hervorrufen der Umschaltbewegung mit dem Antriebsabschnitt der Ventilgliedanordnung zusammenwirkt, wobei der Lagersockel in Achsrichtung seiner zur Montagefläche senkrechten Sockelhochachse von mehreren um die Sockelhochachse herum verteilten Befestigungsschlitzen durchsetzt ist, durch die jeweils der in das Ventilgehäuse eingeschraubte Gewindeschaft einer Befestigungsschraube hindurchgreift, die sich unter Einnahme einer Spannposition mit ihrem Schraubenkopf neben dem Befestigungsschlitz an einer oberen Sockelfläche des Lagersockels abstützt, wodurch der Lagersockel mit seiner der oberen Sockelfläche entgegengesetzten unteren Sockelfläche mit der Montagefläche verspannt ist.

Die Erfindung betrifft ferner ein Verfahren zur Herstellung eines mechanisch betätigbaren Ventils, wobei das Ventil eine Ventileinheit enthält, die ein Ventilgehäuse aufweist und über eine unter Ausführung einer Umschaltbewegung bezüglich des Ventilgehäuses zwischen verschiedenen Schaltstellungen umschaltbare Ventilgliedanordnung verfügt, die mit einem Antriebsabschnitt aus dem Ventilgehäuse herausragt, wobei das Ventil ferner eine Betätigungseinrichtung aufweist, die mit einem eine Betriebsposition einnehmenden Lagersockel an eine Montagefläche außen am Ventilgehäuse angesetzt und mit dem Ventilgehäuse verschraubt ist und die ein bezüglich des Lagersockels bewegliches Betätigungselement aufweist, das mechanisch zu einer Arbeitsbewegung antreibbar ist, bei der es zum Hervorrufen der Umschaltbewegung mit dem Antriebsabschnitt der Ventilgliedanordnung zusammenwirkt, wobei der Lagersockel in Achsrichtung seiner zur Montagefläche senkrechten Sockelhochachse von mehreren um die Sockelhochachse herum verteilten Befestigungsschlitzen durchsetzt ist, durch die jeweils der in das Ventilgehäuse eingeschraubte Gewindeschaft einer Befestigungsschraube hindurchgreift, die sich unter Einnahme einer Spannposition mit ihrem Schraubenkopf neben dem Befestigungsschlitz an einer oberen Sockelfläche des Lagersockels abstützt, wodurch der Lagersockel mit seiner der oberen Sockelfläche entgegengesetzten unteren Sockelfläche mit der Montagefläche verspannt ist.

Ein mechanisch betätigtes Ventil der vorgenannten Art ist in dem Produktblatt "Ventile mechanisch betätigt, Rollenhebel-, Rollenstößelventil", Seite 39, 2015/06, der FESTO AG & Co. KG illustriert. Das Ventil verfügt über eine Ventileinheit mit einem Ventilgehäuse, an das außen eine als Rollenhebel-Betätigungseinrichtung ausgebildete Betätigungseinrichtung angeschraubt ist. Die Betätigungseinrichtung hat einen Lagersockel, an dem ein Rollenhebel verschwenkbar angeordnet ist, der mit einem aus dem Ventilgehäuse der Ventileinheit herausragenden Antriebsabschnitt einer Ventilgliedanordnung der Ventileinheit zusammenwirkt, um eine Umschaltbewegung der Ventilgliedanordnung hervorzurufen. Der Lagersockel hat eine in axialer Verlängerung der Ventileinheit ausgerichtete Sockelhochachse und hat einen länglichen Umriss mit zwei rechtwinkelig zu der Hochachse orientierten Schmalseiten. In jeder Schmalseite des Lagersockels ist ein Befestigungsschlitz ausgebildet, der von einer Befestigungsschraube durchgriffen wird. Die Befestigungsschrauben sind mit ihrem Gewindeschaft in das Ventilgehäuse eingeschraubt und derart unter Einnahme einer Spannposition festgezogen, dass sie den Lagersockel mit dem Ventilgehäuse verspannen. Da die Befestigungsschlitze nur schwer zugänglich sind, ist das Einsetzen der Befestigungsschrauben und folglich die gesamte Anbringung der Rollenhebel-Betätigungseinrichtung relativ umständlich.

Aus der DE 1 721 502 U ist ein Rollenhebelventil bekannt, das mit einer Rollenhebel-Betätigungseinrichtung ausgestattet ist, die über einen einstückig mit dem Ventilgehäuse einer Ventileinheit ausgebildeten Lagersockel und einen an dem Lagersockel verschwenkbar gelagerten, als Betätigungselement fungierenden Rollenhebel verfügt. Die Einstückigkeit zwischen Ventilgehäuse und Lagersockel erfordert eine spezielle Gehäusegestaltung für das Rollenhebelventil und verhindert die Nutzung konventionell gestalteter Ventileinheiten, sodass die Herstellungskosten des bekannten Rollenhebelventils relativ hoch sind.

Bei einem aus der DE 84 36 606 U1 bekannten Rollenhebelventil ist ein Lagersockel einer Rollenhebel-Betätigungseinrichtung als separate Komponente an das Ventilgehäuse einer Ventileinheit angesetzt und an einer Seitenfläche der Ventileinheit mit dem Ventilgehäuse verschraubt. Die Befestigungsschrauben für den Lagersockel sind hier zwar gut zugänglich, gleichwohl ergibt sich eine darin bestehende Unzulänglichkeit, dass der Lagersockel auch eine Seitenfläche des Ventilgehäuses belegt und daher in manchen Fällen hinderlich ist.

Der Erfindung liegt die Aufgabe zugrunde, Maßnahmen zu treffen, die den Zusammenbau eines mit einer mechanisch antreibbaren Betätigungseinrichtung ausgestatteten Ventils vereinfachen.

Zur Lösung dieser Aufgabe ist bei einem mechanisch betätigbaren Ventil der eingangs genannten Art vorgesehen, dass jeder Befestigungsschlitz an dem Lagersockel eine stirnseitige Schlitzöffnung aufweist, die in einer Umfangsrichtung der Sockelhochachse ausgerichtet ist, derart, dass der Lagersockel bei seiner Montage an dem Ventilgehäuse in einer um die Sockelhochachse bezüglich der Betriebsposition verdrehten Ansetzposition an die Montagefläche ansetzbar und anschließend in die Betriebsposition verdrehbar ist, wobei er beim Verdrehen in die Betriebsposition, mit den in der Drehrichtung orientierten stirnseitigen Schlitzöffnungen voraus, mit den Befestigungsschlitzen unter die Schraubenköpfe der bereits weniger weit als bis zur Spannposition in das Ventilgehäuse voreingeschraubten und dabei eine Bereitschaftsposition einnehmenden Befestigungsschrauben einführbar ist.

Die Aufgabe wird ferner in Verbindung mit einem Verfahren der eingangs genannten Art dadurch gelöst,
- dass die Befestigungsschlitze derart an dem Lagersockel ausgebildet werden, dass jeder Befestigungsschlitz an dem Lagersockel eine stirnseitige Schlitzöffnung aufweist, die in einer Umfangsrichtung der Sockelhochachse ausgerichtet ist,
- dass der Lagersockel zunächst in einer um die Sockelhochachse bezüglich der Betriebsposition verdrehten Ansetzposition an die Montagefläche angesetzt wird und erst anschließend in die Betriebsposition verdreht wird, wobei er beim Verdrehen in die Betriebsposition, mit den in der Drehrichtung orientierten stirnseitigen Schlitzöffnungen voraus, mit den Befestigungsschlitzen unter die Schraubenköpfe der Befestigungsschrauben eingeführt wird, die zuvor bereits derart in das Ventilgehäuse eingeschraubt wurden, dass sie eine weniger weit als bis zur Spannposition eingeschraubte Bereitschaftsposition einnehmen,
- und dass anschließend die Befestigungsschrauben in die Spannposition verdreht werden, sodass sie an die die Befestigungsschlitze begrenzenden Bereiche des Lagersockels angedrückt werden und der Lagersockel mit dem Ventilgehäuse verspannt wird.

Im betriebsbereiten Zustand des mechanisch betätigbaren Ventils nimmt der Lagersockel der an die Ventileinheit angeschraubten Betätigungseinrichtung bezüglich des Ventilgehäuses eine als Betriebsposition bezeichnete vorbestimmte Position ein. In dieser Betriebsposition ist der Lagersockel mittels mehrerer ihn in der Höhenrichtung des Lagersockels durchsetzender Befestigungsschrauben mit dem Ventilgehäuse verspannt. Die Befestigungsschrauben durchsetzen dabei jeweils einen in dem Lagersockel ausgebildeten Befestigungsschlitz, sind mit ihrem Gewindeschaft in das Ventilgehäuse eingeschraubt und drücken mit ihrem Schraubenkopf von oben her auf den Lagersockel, sodass selbiger mit dem Ventilgehäuse verspannt ist. Bedingt dadurch, dass die an dem Lagersockel ausgebildeten Befestigungsschlitze stirnseitig offen sind, wobei ihre stirnseitigen Schlitzöffnungen in der Umfangsrichtung der Sockelhochachse orientiert sind, können die Befestigungsschrauben in das Ventilgehäuse voreingeschraubt werden, schon bevor die Betätigungseinrichtung an das Ventilgehäuse angesetzt wird. Die Befestigungsschrauben werden allerdings weniger weit als bis zur Spannposition eingeschraubt, sodass sie eine Bereitschaftsposition einnehmen, in der der Abstand zwischen der Montagefläche und der der Montagefläche zugewandten Unterseite des Schraubenkopfes größer ist als die Höhe des Lagersockels im Bereich der Befestigungsschlitze. Im derart vormontierten Zustand der Befestigungsschrauben kann die Betätigungseinrichtung mit ihrem Lagersockel an die Montagefläche angesetzt werden, ohne mit den bereits eingesetzten Befestigungsschrauben zu kollidieren. Hierzu erfolgt das Ansetzen des Lagersockels nicht in einer der Betriebsposition entsprechenden winkelmäßigen Ausrichtung, sondern in einer diesbezüglich verdrehten Ausrichtung, wobei die hierbei vom Lagersockel bezüglich des Ventilgehäuses eingenommene Relativposition als Ansetzposition bezeichnet werden kann. In der Ansetzposition weisen die stirnseitigen Schlitzöffnungen der Befestigungsschlitze aufgrund dessen, dass sie in der Umfangsrichtung der Sockelhochachse ausgerichtet sind, jeweils in Richtung zu einer der Befestigungsschrauben. Nun lässt sich der Lagersockel, zweckmäßigerweise einschließlich aller sonstigen Komponenten der Betätigungseinrichtung, um die Sockelhochachse verdrehen, wobei er mit seinen die Befestigungsschlitze aufweisenden Abschnitten unter die Schraubenköpfe bewegt wird und die über die Montagefläche vorstehenden Längenabschnitte der Gewindeschäfte durch die stirnseitigen Schlitzöffnungen hindurch in die Befestigungsschlitze eingreifen. Ist der Lagersockel in die winkelmäßige Ausrichtung der Betriebsposition verdreht, sind die Befestigungsschrauben nur noch festzuziehen, sodass sie die Spannposition einnehmen und der Lagersockel unverrückbar mit dem Ventilgehäuse verspannt ist. Die Möglichkeit zur Vormontage der Befestigungsschrauben ermöglicht einen sehr zeitsparenden Zusammenbau des Ventils, weil die zugeordneten Gewindeöffnungen am Ventilgehäuse dabei noch sehr gut zugänglich sind und nicht von der Betätigungseinrichtung verdeckt werden. Der gesamte Anbringungsvorgang der Betätigungseinrichtung ist praktisch eine Kombination aus einer translatorischen und einer rotatorischen Maßnahme.

Vorteilhafte Weiterbildungen der Erfindung gehen aus den Unteransprüchen hervor.

Wenn die Befestigungsschlitze eine ausreichende Breite haben, um beim Verdrehen des Lagersockels den Eintritt der Gewindeschäfte zu erlauben, können sie ohne weiteres zumindest partiell oder auch in ihrer Gesamtheit mit einer linearen Längserstreckung ausgebildet sein. Besonders vorteilhaft wird allerdings eine Realisierung der Befestigungsschlitze mit gekrümmter Längserstreckung angesehen, wobei die konkave Seite der Krümmung der Sockelhochachse zugewandt ist. Die gekrümmte Längserstreckung trägt der rotativen Bewegung Rechnung und erlaubt ein paarweises Ineinandereingreifen von Befestigungsschlitzen und Gewindeschäften selbst dann, wenn die Schlitzbreite der Befestigungsschlitze nur geringfügig größer ist als der Durchmesser der Gewindeschäfte. Auf diese Weise ergibt sich eine große Flächenüberdeckung zwischen den Schraubenköpfen und den zu den Befestigungsschlitzen benachbarten Flächenabschnitten der oberen Sockelfläche, was eine sichere Übertragung hoher Spannkräfte gewährleistet.

Vorzugsweise liegen die stirnseitigen Schlitzöffnungen der Befestigungsschlitze jeweils auf einem Kreisbogen, dessen Zentrum mit der Sockelhochachse zusammenfällt. Indem die Sockelhochachse als Drehachse beim Verdrehen zwischen der Ansetzposition und der Betriebsposition fungiert, ist auf diese Weise ein problemloses Ineinandereingreifen der Befestigungsschlitze und Gewindeschäfte gewährleistet.

Wenn die mehreren Befestigungsschrauben unterschiedlich weit von der Sockelhochachse entfernt sind, liegen die zugeordneten Befestigungsschlitze zweckmäßigerweise auf unterschiedlichen Kreisbögen mit voneinander abweichendem Radius. Als vorteilhafter wird es jedoch angesehen, die Befestigungsschrauben untereinander mit gleichem Abstand zur Sockelhochachse zu platzieren, sodass dann auch die zugeordneten Befestigungsschlitze gemeinsam auf ein und demselben Kreisbogen angeordnet werden können, was die Herstellung vereinfacht.

Die mit der Sockelhochachse zusammenfallende Drehachse kann eine virtuelle Drehachse sein. Zweckmäßiger ist es allerdings, wenn die Drehachse durch eine Zentriereinrichtung mechanisch vorgegeben ist. Hierbei sind das Ventilgehäuse und der Lagersockel mit miteinander kooperierenden Bestandteilen der Zentriereinrichtung ausgestattet, sodass sich eine stabile Vorgabe einer Drehachse ergibt, wenn der Lagersockel in die Ansetzposition am Ventilgehäuse angesetzt ist.

Bevorzugt setzt sich die Zentriereinrichtung aus einem am Lagersockel ausgebildeten Zentrierloch und einem am Ventilgehäuse ausgebildeten, senkrecht von der Montagefläche wegragenden und in das Zentrierloch eintauchenden Zentriervorsprung zusammen. Zentrierloch und Zentriervorsprung sind so aufeinander abgestimmt, dass der Lagersockel rechtwinkelig zur Sockelhochachse eine allseitige Abstützung erfährt, gleichzeitig jedoch ein Drehfreiheitsgrad zur Ermöglichung des Verdrehens zwischen der Ansetzposition und der Betriebsposition gewährleistet ist.

An dieser Stelle sei erwähnt, dass die Betätigungseinrichtung bevorzugt mit einer lösbaren Schraubverbindung am Ventilgehäuse fixiert ist. Bei Bedarf lässt sich dann die Betätigungseinrichtung mit umgekehrter Handhabungsreihenfolge wie bei der Montage vom Ventilgehäuse wieder abnehmen. Zunächst werden die Befestigungsschrauben gelöst, anschließend kann der Lagersockel aus der Betriebsposition in die Ansetzposition verschwenkt und dann die gesamte Betätigungseinrichtung vom Ventilgehäuse abgenommen werden.

In einer bevorzugten Ausgestaltung hat der Lagersockel einen die untere Sockelfläche definierenden und von den Befestigungsschlitzen durchsetzten Fußabschnitt. Dieser Fußabschnitt ist insbesondere plattenförmig ausgebildet. Der Fußabschnitt hat bevorzugt einen länglichen Umriss mit einer Längsachse und einer dazu rechtwinkeligen Querachse. Vorzugsweise handelt es sich dabei um einen zumindest im Wesentlichen rechteckigen Umriss. Zwei Befestigungsschlitze, bei denen es sich insbesondere um die einzigen Befestigungsschlitze handelt, sind auf einander entgegengesetzten Seiten der Querachse mit Abstand zueinander angeordnet, und zwar so, dass ihre stirnseitigen Schlitzöffnungen einander entgegengesetzt in der Achsrichtung der Querachse orientiert sind. Jede stirnseitige Schlitzöffnung mündet daher zu einem von zwei einander entgegengesetzten Randbereichen der Fußabschnittes aus.

Bevorzugt ist der Lagersockel mit genau zwei Befestigungsschrauben am Ventilgehäuse fixiert. Diese Befestigungsschrauben sind insbesondere in sich diagonal gegenüberliegenden Eckbereichen des Fußabschnittes platziert.

Es ist des Weiteren von Vorteil, wenn die stirnseitigen Schlitzöffnungen bezogen auf die Sockelhochachse in der gleichen Umfangsrichtung orientiert sind wie die Einschraub-Drehrichtung der Befestigungsschrauben bezüglich des Ventilgehäuses. Dies hat den Effekt, dass die beim Festziehen der Befestigungsschrauben zwischen den Schraubenköpfen und dem Lagersockel wirkenden Reibungskräfte ein Drehmoment auf den Lagersockel ausüben, das einen derartigen Richtungssinn hat, dass die Gewindeschäfte in die Befestigungsschlitze hineingedrückt werden. Dadurch ist sichergestellt, dass sich der Lagersockel beim Festziehen der Befestigungsschrauben nicht versehentlich aus der Befestigungsposition herausdreht.

Vorzugsweise fungieren die den stirnseitigen Schlitzöffnungen entgegengesetzten stirnseitigen Randbereiche der Befestigungsschlitze als Anschlagflächen, die durch das Zusammenwirken mit den Gewindeschäften die bezüglich des Ventilgehäuses eingenommene Drehwinkellage des Lagersockels in der Betriebsposition vorgeben.

Bevorzugt ist das mechanisch betätigbare Ventil ein Rollenhebelventil, dessen Betätigungseinrichtung eine Rollenhebel-Betätigungseinrichtung ist, wobei das Betätigungselement als verschwenkbar an dem Lagersockel gelagerter Rollenhebel ausgebildet ist. An dem Rollenhebel findet sich beabstandet zur Schwenkachse ein Kraftabgabeabschnitt, der mit dem Antriebsabschnitt der Ventilgliedanordnung zusammenwirkt, um bei der Arbeitsbewegung des Rollenhebels, die eine Schwenkbewegung ist, eine Umschaltkraft auf den Antriebsabschnitt der Ventilgliedanordnung auszuüben und die Schaltstellung der Ventilgliedanordnung zu verändern.

Der Rollenhebel verfügt über einen eine Betätigungsrolle tragenden Schwenkarm, der mittels Schwenklagermitteln an dem Lagersockel verschwenkbar gelagert ist. Der Rollenhebel kann einarmig ausgeführt sein und den Schwenkarm als einzigen Arm aufweisen, der direkt die Betätigungsrolle in bevorzugt drehbarer Weise trägt.

Bei einer alternativen Ausgestaltung ist der Rollenhebel zweiarmig ausgebildet und enthält zusätzlich zu dem Schwenkarm auch noch einen schwenkbeweglich am Schwenkarm gelagerten Kipparm, wobei die Betätigungsrolle in diesem Fall an dem Kipparm gelagert ist. Der Kipparm ist bevorzugt federnd nachgiebig, sodass bei mechanischer Beaufschlagung durch ein externes Betätigungsglied eine Schwenkbewegung des Schwenkarmes nur bei einer Verfahrrichtung des Betätigungsgliedes auftritt.

Nachfolgend wird die Erfindung anhand der beiliegenden Zeichnung näher erläutert. In dieser zeigen:
- Figur 1: eine bevorzugte Ausführungsform eines erfindungsgemäßen, mechanisch betätigbaren Ventils in einer Ausführung als Rollenhebelventil und in perspektivischer Ansicht,
- Figur 2: das Ventil aus Figur 1 in einem Längsschnitt gemäß Schnittlinie II-II, wobei das Betätigungselement in durchgezogenen Linien in einer unverschwenkten Grundstellung und in gestrichelten Linien in einer verschwenkten Betätigungsstellung illustriert ist,
- Figur 3: eine Montagephase bei der Herstellung des Ventils, wobei die Betätigungseinrichtung vor dem Ansetzen an das Ventilgehäuse gezeigt ist und winkelmäßig in der Ansetzposition ausgerichtet ist,
- Figur 4: eine sich an die Montagephase der Figur 3 anschließende weitere Montagephase im unter Einnahme der Ansetzposition an die Montagefläche des Ventilgehäuses angesetzten Zustand des Lagersockels,
- Figur 5: eine Draufsicht der Anordnung aus Figur 4 mit Blickrichtung gemäß Pfeil V aus Figur 4,
- Figur 6: eine Unteransicht des Lagersockels, und

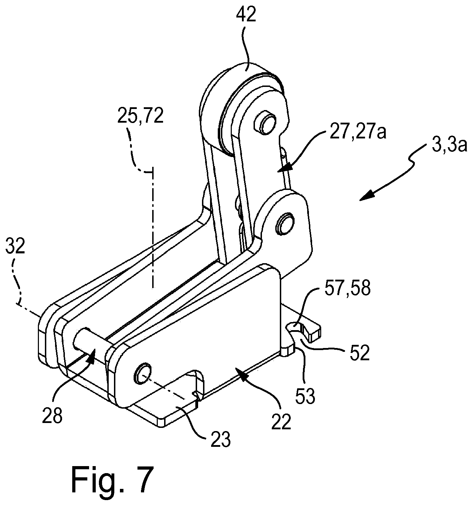

- Figur 7: eine isometrische Einzeldarstellung der als Rollenhebel-Betätigungseinrichtung ausgebildeten Betätigungseinrichtung.

In der Zeichnung ist ein allgemein mit Bezugsziffer 1 bezeichnetes, mechanisch betätigbares Ventil abgebildet, das in der bevorzugten Bauart eines Rollenhebelventils 1a ausgeführt ist.

Das Ventil 1 verfügt über eine Ventileinheit 2 und eine zur mechanischen Betätigung der Ventileinheit 2 dienende Betätigungseinrichtung 3, wobei die Betätigungseinrichtung 3 beim Ausführungsbeispiel eine Rollenhebel-Betätigungseinrichtung 3a ist.

Die Ventileinheit 2 hat eine Längsachse 4. Die Betätigungseinrichtung 3 ist bevorzugt an einer der beiden in Achsrichtung der Längsachse 4 weisenden axialen Stirnseiten der Ventileinheit 2 angeordnet.

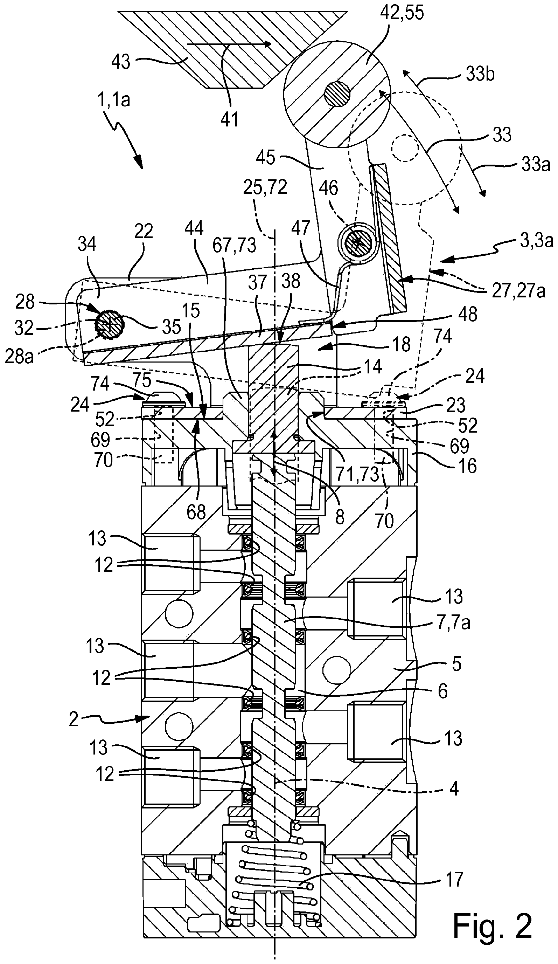

Die Ventileinheit 2 besitzt ein Ventilgehäuse 5, in dem eine Ventilkammer 6 ausgebildet ist, in der sich eine Ventilgliedanordnung 7 erstreckt. Die Ventilgliedanordnung 7 besteht beim Ausführungsbeispiel aus einem einzigen Ventilglied 7a, kann aber auch mehrere Ventilglieder umfassen. Im Rahmen einer durch einen Doppelpfeil angedeuteten Umschaltbewegung 8 kann die Ventilgliedanordnung 7 relativ zum Ventilgehäuse 5 in Achsrichtung der Längsachse 4 bewegt und dadurch zwischen zwei Schaltstellungen umgeschaltet werden. In der Figur 2 ist die erste Schaltstellung illustriert.

Die Ventilgliedanordnung 7 kooperiert mit ortsfest bezüglich des Ventilgehäuses 5 angeordneten ringförmigen Dichtflächen 12, die bevorzugt koaxial zu der Ventilgliedanordnung 7 ausgerichtet sind. Die Dichtflächen 12 sind in Achsrichtung der Längsachse 4 mit Abstand zueinander angeordnet und begrenzen ebenfalls axial aufeinanderfolgend angeordnete Längenabschnitte der Ventilkammer 6, die jeweils mit einem das Ventilgehäuse 5 durchsetzenden Ventilkanal 13 kommunizieren. Die Ventilkanäle 13 münden zur Außenseite des Ventilgehäuses 5 aus und ermöglichen in an sich bekannter Weise das Anschließen einer Druckquelle, insbesondere einer Druckluftquelle, das Anschließen mindestens eines zu betätigenden Verbrauchers und die Verbindung zu einer Drucksenke, insbesondere zur Atmosphäre.

In den beiden Schaltstellungen kooperiert die Ventilgliedanordnung 7 in unterschiedlicher Weise mit den Dichtflächen 12, sodass die Ventilkanäle 13 in unterschiedlichem Muster miteinander verbunden und voneinander abgetrennt werden. Auf diese Weise kann beispielsweise die Hin- und Herbewegung des Abtriebsteils eines den Verbraucher bildenden fluidbetätigten Antriebes hervorgerufen werden.

Beim Ausführungsbeispiel sind die Dichtflächen 12 radial orientiert und konzentrisch um die Ventilgliedanordnung 7 herum angeordnet. Es findet also ein radialer Dichtkontakt zwischen der Ventilgliedanordnung 7 und den Dichtflächen 12 statt. Die Ventileinheit 2 ist hierbei ein Kolbenschieberventil, das mit einem als Kolbenschieber ausgebildeten Ventilglied 7a ausgestattet ist.

Bei einem nicht gezeigten Ausführungsbeispiel ist die Ventileinheit 2 ein Sitzventil, dessen Dichtflächen 12 axial orientiert sind und mit axial orientierten Verschlussabschnitten der Ventilgliedanordnung 7 zusammenwirken können.

Die Umschaltbewegung 8 ist durch mechanische Beaufschlagung eines relativ zum Ventilgehäuse 5 beweglichen Antriebsabschnittes 14 der Ventilgliedanordnung 7 hervorrufbar. Der Antriebsabschnitt 14 ist beim Ausführungsbeispiel eine bezüglich des Ventilglieds 7a separate Komponente und ist dem Ventilglied 7a derart axial vorgelagert, dass er in der Lage ist, eine drückende Kraft auf das Ventilglied 7 zu übertragen. Bei einem nicht gezeigten Ausführungsbeispiel ist der Antriebsabschnitt 14 axial fest und bevorzugt einstückig mit einem Ventilglied 7a der Ventilgliedanordnung 7 verbunden

An der die Betätigungseinrichtung 3 aufweisenden axialen Stirnseite der Ventileinheit 2 verfügt das Ventilgehäuse 5 außen über eine axiale Stirnfläche, die aufgrund Ihres Verwendungszweckes als Montagefläche 15 bezeichnet sei. Die Montagefläche 15 befindet sich exemplarisch an einer ersten stirnseitigen Abschlusswand 16 des Ventilgehäuses 5, die axial gleitverschieblich von dem Antriebsabschnitt 14 durchsetzt ist.

In dem von dem Betätigungsabschnitt 14 durchsetzten Bereich weist das Ventilgehäuse 5 außen einen axial über die Montagefläche vorstehenden Axialvorsprung auf, bei dem es bevorzugt um einen später noch erläuterten Zentriervorsprung 67 handelt. Der Zentriervorsprung 67 ist radial außen bevorzugt kreisförmig konturiert und koaxial zu der Längsachse 4 ausgerichtet. Zweckmäßigerweise ist der Zentriervorsprung 67 hohlzylindrisch ausgebildet und axial verschieblich von dem Antriebsabschnitt 14 durchsetzt.

Der Antriebsabschnitt 14 ragt in Abhängigkeit von der Schaltstellung der Ventilgliedanordnung 7 mehr oder weniger weit aus dem Ventilgehäuse 5 bzw. dem Zentriervorsprung 67 heraus. Exemplarisch ragt er in der ersten Schaltstellung der Ventilgliedanordnung 7 weiter aus dem Zentriervorsprung 67 heraus als in der nicht illustrierten zweiten Schaltstellung der Ventilgliedanordnung 7.

Zweckmäßigerweise ist die Ventilgliedanordnung 7 und folglich auch der Antriebsabschnitt 14 durch eine Rückstellfedereinrichtung 17 der Ventileinheit 2 in die aus Figur 2 ersichtliche erste Schaltstellung vorgespannt. Die Rückstellfedereinrichtung 17 stützt sich im Innern des Ventilgehäuses 5 einerseits an dem Ventilgehäuse 5 und andererseits an der Ventilgliedanordnung 7 ab.

Die Umschaltbewegung 8 der Ventilgliedanordnung 7 ist durch mechanisches Zusammenwirken eines beweglichen Betätigungselementes 27 der Betätigungseinrichtung 3 mit dem Antriebsabschnitt 14 hervorrufbar. Das Betätigungselement 27 kooperiert mit dem Antriebsabschnitt 14 in einem außerhalb des Ventilgehäuses 5 liegenden, der Montagefläche 15 vorgelagerten Arbeitsbereich 18. Durch drückende Beaufschlagung des Antriebsabschnittes 14 kann das Betätigungselement 27 den Antriebsabschnitt 14 verschieben und mithin die Ventilgliedanordnung 7 in die zweite Schaltstellung bewegen.

Die Betätigungseinrichtung 3 besitzt einen als bezüglich des Ventilgehäuses 5 separate Komponente ausgebildeten Lagersockel 22, über den sie im Bereich der Montagefläche 15 am Ventilgehäuse 5 der Ventileinheit 2 fixiert ist. In der Gebrauchsstellung der Betätigungseinrichtung 3 ist der Lagersockel 22 mit einer unteren Sockelfläche 68 voraus unter Einnahme einer Betriebsposition an die Montagefläche 15 des Ventilgehäuses 5 angesetzt und mit Hilfe von Befestigungsschrauben 24 mit dem Ventilgehäuse 5 verschraubt.

Zweckmäßigerweise besitzt der der Lagersockel 22 an seiner der Ventileinheit 2 zugewandten Unterseite einen starren Fußabschnitt 23, über den er am Ventilgehäuse 5 angebracht ist. Der Fußabschnitt 23 ist bevorzugt plattenförmig ausgebildet und liegt mit der an seiner Unterseite ausgebildeten unteren Sockelfläche 68 an der Montagefläche 15 an. Die Befestigungsschrauben 24 durchsetzen den starren Fußabschnitt 23 und sind jeweils mit einem Gewindeschaft 70 in eine zu der Montagefläche 15 ausmündende Gewindebohrung 69 des Ventilgehäuses 5 eingeschraubt.

Der Lagersockel 22 hat eine Sockelhochachse 25, die gleichzeitig auch die Hochachse der gesamten Betätigungseinrichtung 3 repräsentiert. In der Betriebsstellung des Lagersockels 22 hat die Sockelhochachse 25 bevorzugt die gleiche Ausrichtung wie die Längsachse 4 der Ventileinheit 2. Die Sockelhochachse 25 erstreckt sich rechtwinkelig zur Hauptausdehnungsebene des plattenförmigen Fußabschnittes 23.

Der Fußabschnitt 23 des Lagersockels 22 hat, insbesondere mittig, eine als Zentrierloch 71 fungierende Durchbrechung, durch die der Antriebsabschnitt 14 hindurchtreten kann. Der Arbeitsbereich 18 ist dem Fußabschnitt 23 an dessen dem Ventilgehäuse 5 entgegengesetzter Oberseite vorgelagert.

Der Innendurchmesser des Zentrierloches 71 ist derart auf den Außendurchmesser des Zentriervorsprunges 67 abgestimmt, dass der Zentriervorsprung 67 mit einer Zentrierfunktion in das Zentrierloch 71 eingreift, wenn der Lagersockel 22 an die Montagefläche 15 angesetzt ist. Der Zentriervorsprung 67 und das Zentrierloch 71 definieren die zentrierend miteinander kooperierenden Bestandteile einer Zentriereinrichtung 73.

Durch die Zentrierfunktion ist der Lagersockel 22 allseits radial bezüglich des Zentriervorsprunges 67 abgestützt und folglich die Radialposition des Lagersockels 22 bezüglich der Längsachse 4 der Ventileinheit 2 formschlüssig vorgegeben.

Der Eingriff des Zentriervorsprunges 67 in das Zentrierloch 71 definiert allerdings einen Drehfreiheitsgrad für eine Drehbewegung des Lagersockel 22 bezüglich des Ventilgehäuses 2 um eine Drehachse 72. In diesem Zusammenhang sind die Außenkontur des Zentriervorsprunges 67 und die Innenkontur des Zentrierloches 71 bevorzugt in aufeinander abgestimmter Weise kreisförmig konturiert.

Die Drehachse 72 fällt mit der Längsachse 4 der Ventileinheit 2 und insbesondere auch mit der Sockelhochachse 25 zusammen. Der mit dem Zentrierloch 71 auf den Zentriervorsprung 67 aufgesteckte Lagersockel 25 ist also um die Sockelhochachse 25 relativ zum Ventilgehäuse 5 verdrehbar, solange die Befestigungsschrauben 24 nicht festgezogen sind.

Im Folgenden sei die von der Ventileinheit 2 in Achsrichtung der Sockelhochachse 25 wegweisende Seite der Betätigungseinrichtung 3 auch als Oberseite und die der Ventileinheit 2 zugewandte Seite der Betätigungseinrichtung 3 auch als Unterseite bezeichnet.

Die Betätigungseinrichtung 3 weist zusätzlich zu dem Lagersockel 22 das oben schon angesprochene Betätigungselement 27 auf. Das Betätigungselement 27 ist derart beweglich an dem Lagersockel 22 gelagert, dass es diesbezüglich eine durch einen Doppelpfeil angedeutete, hin und her gehende Arbeitsbewegung 33 ausführen kann.

Bevorzugt handelt es sich bei der Arbeitsbewegung 33 um eine Schwenkbewegung, was auf das Ausführungsbeispiel zutrifft. Hierzu ist das Betätigungselement 27 mittels Schwenklagermitteln 28 an dem Lagersockel 22 verschwenkbar gelagert. Die Schwenklagermittel 28 definieren eine Schwenkachse 32, um die das Betätigungselement 27 unter Ausführung der Arbeitsbewegung 33 im Uhrzeigersinn und entgegen dem Uhrzeigersinn relativ zum Lagersockel 22 verschwenkbar ist. Die Schwenkbewegung in Richtung zum Antriebsabschnitt 14 sei auch als Vorwärts-Schwenkbewegung 33a bezeichnet, die entgegengesetzte Schwenkbewegung auch als Rückwärts-Schwenkbewegung 33b.

Die Schwenkachse 32 verläuft in einer zu der Sockelhochachse 25 rechtwinkeligen Ebene. Die Schwenkebene des Betätigungselementes 27 verläuft parallel zu der Sockelhochachse 25 und liegt in der Figur 2.

Das Betätigungselement 27 hat einen rückseitigen Endabschnitt 34, der über die Schwenklagermittel 28 unter Definition der Schwenkachse 32 schwenkbeweglich mit dem Lagersockel 22 gekoppelt ist. Beim Ausführungsbeispiel enthalten die Schwenklagermittel 28 einen Achsbolzen 35, der sowohl den rückseitigen Endabschnitt 34 als auch den Lagersockel 22 durchsetzt. Beispielsweise ist der Achsbolzen 35 an dem Lagerabschnitt 34 fixiert und das Betätigungselement 27 ist im Bereich seines rückseitigen Endabschnittes 34 bezüglich des Achsbolzens 35 drehbar.

Die lagersockelseitigen Bestandteile der Schwenklagermittel 28 befinden sich zweckmäßigerweise an zwei von dem Fußabschnitt 23 nach oben ragenden, bevorzugt plattenförmig ausgebildeten Lagerschenkeln 36 des Lagersockels 22. Die beiden Lagerschenkel 36 sind in Achsrichtung der Schwenkachse 32 mit Abstand zueinander angeordnet und bevorzugt einstückig an einander entgegengesetzten Randbereichen des Fußabschnittes 23 angeformt. Exemplarisch bestehen die lagersockelseitigen Bestandteile der Schwenklagermittel 28 aus in Achsrichtung der Schwenkachse 32 miteinander fluchtenden Lagerlöchern 28a der Lagerschenkel 36, in die der Achsbolzen 35 mit seinen beiden einander entgegengesetzten Endabschnitten eingreift. Der Achsbolzen 35 durchquert dabei den zwischen den beiden Lagerschenkeln 36 befindlichen Zwischenraum.

Das Betätigungselement 27 ragt zumindest mit seinem rückseitigen Endabschnitt 34 in den zwischen den beiden Lagerschenkeln 36 befindlichen Zwischenraum des Lagersockels 22 hinein. Er ist schmäler als der lichte Abstand zwischen den beiden Lagerschenkeln 36, sodass er den für die Schwenkbarkeit erforderlichen Bewegungsspielraum hat.

Die Schwenkachse 32 ist quer zu der Sockelhochachse 25 mit Abstand zu dem Arbeitsbereich 18 angeordnet. Somit erstreckt sich das Betätigungselement 27 ausgehend von der Schwenkachse 32 quer zur Sockelhochachse 25 in den Arbeitsbereich 18 und über den in den Arbeitsbereich 18 hineinragenden Antriebsabschnitt 14 hinweg. Mindestens ein mit Abstand zu der Schwenkachse 32 angeordneter Kraftabgabeabschnitt 37 des Betätigungselementes 27 ist dabei einer vom Ventilgehäuse 5 weg nach oben weisenden Stirnfläche 38 des Antriebsabschnittes 14 vorgelagert und liegt an der Stirnfläche 38 des Antriebsabschnittes 14 gleitverschieblich an.

An einer zu der Schwenkachse 32 beabstandeten Stelle weist das Betätigungselement 27 einen Krafteinleitungsabschnitt 55 auf, der zum Zusammenwirken mit einem externen Betätigungsglied 43 vorgesehen ist.

Im Betrieb ist das Ventil 1 so platziert, dass der Krafteinleitungsabschnitt 55 im Verfahrweg des externen Betätigungsgliedes 43 liegt, das beispielsweise zu einer Maschine gehört. Das Betätigungsglied 43 kann im Rahmen einer Steuerbewegung 41 auf den Krafteinleitungsabschnitt 55 einwirken und dadurch die Arbeitsbewegung 33 hervorrufen.

Durch die Arbeitsbewegung 33 kann das Betätigungsglied 27 zwischen einer in Figur 2 in durchgezogenen Linien illustrierten Grundstellung, in der die Ventilgliedanordnung 7 die erste Schaltstellung einnimmt, und einer in Figur 2 gestrichelt dargestellten Betätigungsstellung, in der die Ventilgliedanordnung 7 die zweite Schaltstellung einnimmt, verschwenkt werden. Das Verschwenken in die Betätigungsstellung erfolgt durch die Vorwärts-Schwenkbewegung 33a, das Verschwenken in die Grundstellung erfolgt durch die Rückwärts-Schwenkbewegung 33b.

Wenn die Betätigungseinrichtung 3 - was auf das Ausführungsbeispiel zutrifft - eine Rollenhebel-Betätigungseinrichtung 3a ist, ist das Betätigungselement 27 ein Rollenhebel 27a, der als Krafteinleitungsabschnitt 55 eine drehbare Betätigungsrolle 42 aufweist. Bevorzugt verfügt der Rollenhebel 27 über einen an dem Lagersockel bezüglich der Schwenkachse 32 schwenkbar gelagerten Schwenkarm 44, der mittelbar oder unmittelbar die Betätigungsrolle 42 trägt. Bei einem nicht gezeigten Ausführungsbeispiel ist die Betätigungsrolle 42 direkt an dem Schwenkarm 44 drehbar gelagert.

Eine beim Ausführungsbeispiel vorhandene vorteilhafte Ausführungsform des Rollenhebels 27a ist zweiarmig ausgeführt und verfügt zusätzlich zu dem Schwenkarm 44 über einen Kipparm 45. Der Kipparm 45 ist an dem Schwenkarm 44 um eine Kippachse 46 verschwenkbar gelagert, wobei die Kippachse 46 parallel zu der Schwenkachse 32 verläuft. Die Betätigungsrolle 42 ist in diesem Fall drehbar an dem Kipparm 45 gelagert. Eine zwischen dem Kipparm 45 und dem Schwenkarm 44 wirksame Federeinrichtung 47 beaufschlagt den Kipparm 45 ständig in Richtung einer Ausgangsstellung, in der er an einer Anschlagfläche 48 des Schwenkarms 44 anliegt.

Die Anschlagfläche 48 ist derart im Schwenkweg des Kipparms 45 angeordnet, dass der Kipparm 45 an sie angedrückt wird, wenn er durch das Betätigungsglied 43 im Richtungssinn der Vorwärts-Schwenkbewegung 33a beaufschlagt wird. Dadurch wird der gesamte Rollenhebel 27 zur Beaufschlagung des Antriebsabschnittes 14 verschwenkt. Hat das Betätigungsglied 43 die Betätigungsrolle 42 passiert, schnappt der Rollenhebel 27a aufgrund der Rückstellfedermittel 17 im Rahmen der Rückwärts-Schwenkbewegung 33b in die Grundstellung zurück. Bewegt sich das Betätigungsglied 43 anschließend wieder in seine Ausgangsposition zurück, kann es über die Betätigungsrolle 42 hinweggleiten, ohne ein Verschwenken des Rollenhebels 27a in die Betätigungsstellung zu verursachen. Grund dafür ist, dass der die Betätigungsrolle 42 aufweisende Kipparm 45 in diesem Fall entgegen der Rückstellkraft der Federeinrichtung 47 relativ zum Schwenkarm 44 verschwenken kann, ohne dass auf den Schwenkarm 44 ein Drehmoment ausgeübt wird.

Der mindestens eine Kraftabgabeabschnitt 37 ist sowohl bei einarmiger als auch bei zweiarmiger Ausführung des Rollenhebels 27 von einem Abschnitt des Schwenkarms 44 gebildet.

Eine Besonderheit der Betätigungseinrichtung 3 besteht in der Art und Weise, wie die Schraubbefestigung des Lagersockels 22 an dem Ventilgehäuse 5 realisiert ist.

Wenn der Lagersockel 22 unter Einnahme seiner Betriebsposition an die Montagefläche 15 angesetzt ist, liegt er mit der an seiner Unterseite ausgebildeten unteren Sockelfläche 68 an der Montagefläche 15 des Ventilgehäuses 5 an, wobei er mittels der Befestigungsschrauben 24 in Achsrichtung der Längsachse 4 mit der Montagefläche 15 verspannt ist. Der Effekt des Verspannens rührt daher, dass jede Befestigungsschraube 24 mit einem sich an den Gewindeschaft 70 anschließenden Schraubenkopf 74 von der Oberseite des Lagersockels 22 her an eine nach oben weisende obere Sockelfläche 75 des Lagersockels 22 angedrückt ist. Die obere Sockelfläche 75 ist der unteren Sockelfläche 68 entgegengesetzt orientiert und weist in die gleiche Richtung wie die Montagefläche 15. Bevorzugt ist die von den Schraubenköpfen 74 beaufschlagte obere Sockelfläche 75 an dem plattenförmigen Fußabschnitt 23 ausgebildet.

Damit die Relativposition zwischen dem Lagersockel 22 und dem Ventilgehäuse 5 unverrückbar fixiert ist, sind die Betätigungsschrauben 24 mit einem ausreichenden Drehmoment festgezogen, wobei die dabei von ihnen eingenommene Position als Spannposition bezeichnet sei. Die durch die Befestigungsschrauben 24 auf den Lagersockel 22 ausgeübte Spannkraft ist insbesondere auch ausreichend groß, um ein Verdrehen des Lagersockels 22 relativ zum Ventilgehäuse 5 um die Sockelhochachse 25 zu verhindern.

Jede eine Spannposition einnehmende Befestigungsschraube 24 durchsetzt mit ihrem Gewindeschaft 70 einen seinerseits den Lagersockel 22 zwischen der oberen Sockelfläche 75 und der unteren Sockelfläche 68 durchsetzenden Befestigungsschlitz 52. Die Anzahl der Befestigungsschlitze 52 entspricht bevorzugt der Anzahl der Befestigungsschrauben 24, wobei jeder Befestigungsschraube 24 ein eigener Befestigungsschlitze 52 zugeordnet ist. Exemplarisch sind die Befestigungsschlitze 52 in dem Fußabschnitt 23 ausgebildet, den sie in Achsrichtung der Sockelhochachse 25 jeweils durchsetzen.

Die Gewindebohrungen 69 sind um die Längsachse 4 des Ventilgehäuses 5 verteilt in der Montagefläche 15 ausgebildet. Dabei sind sie mit radialem Abstand zu der Längsachse 4 angeordnet. Bevorzugt sind die Abstände sämtlicher Gewindebohrungen 69 von der Längsachse 4 gleichgroß.

Die Befestigungsschlitze 52 sind in dem Lagersockel 22 beziehungsweise in dem Fußabschnitt 23 mit radialem Abstand zur Sockelhochachse 25 angeordnet und um die Sockelhochachse 25 herum verteilt. Ihre Winkelabstände zueinander entsprechen den Winkelabständen zwischen den Gewindebohrungen 69 bezogen auf die Längsachse 4. Auch entsprechen die radialen Abstände zwischen der Sockelhochachse 25 und den Befestigungsschlitzen 52 den radialen Abständen zwischen den Gewindebohrungen 69 und der Längsachse 4 der Ventileinheit 2.

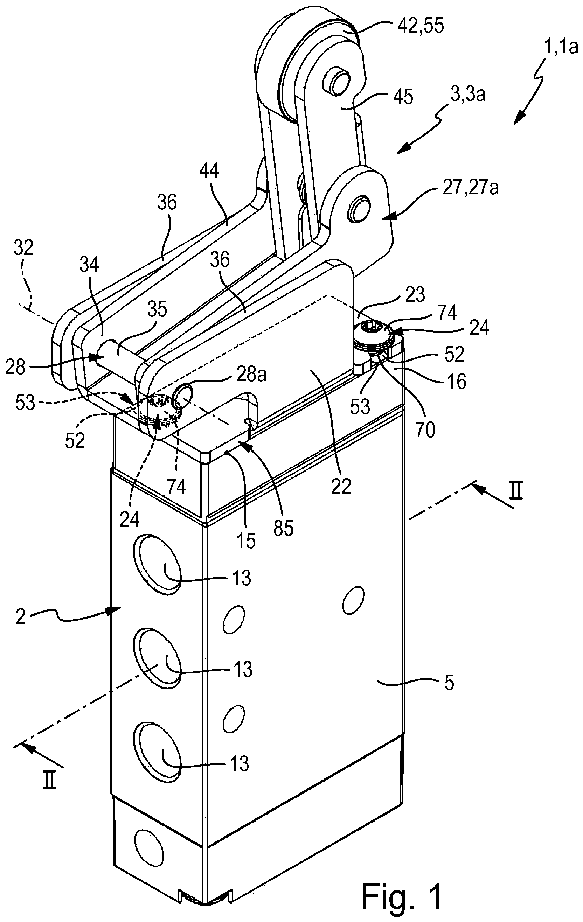

Ist der Lagersockel 22 in der aus Figuren 1 und 2 ersichtlichen Betriebsposition positioniert, liegt eine in Achsrichtung der Sockelhochachse 25 paarweise fluchtende Anordnung von Gewindebohrungen 69 und Befestigungsschlitzen 52 vor. Dabei durchgreifen die Befestigungsschrauben 24 mit ihren Gewindeschäften 70 den jeweils zugeordneten Befestigungsschlitz 52 und sind in die zugeordnete Gewindebohrung 69 eingeschraubt. Jeder Schraubenkopf 74 stützt sich neben dem zugeordneten Befestigungsschlitz 52 an der oberen Sockelfläche 75 des Fußabschnittes 23 ab.

Die Befestigungsschlitze 52 sind an einer Stirnseite offen, wobei die entsprechende Öffnung als stirnseitige Schlitzöffnung 53 bezeichnet sei. Außerdem ist jeder Befestigungsschlitz 52 derart ausgerichtet, dass seine stirnseitige Schlitzöffnung 32 in eine durch einen Pfeil kenntlich gemachte Umfangsrichtung 26 der Sockelhochachse 25 weist. Die stirnseitigen Schlitzöffnungen 53 sämtlicher Befestigungsschlitze 52 weisen in die gleiche Umfangsrichtung 26 der Sockelhochachse 25. Zur besseren Unterscheidung sei diese Umfangsrichtung 26 im Folgenden auch als erste Umfangsrichtung 26 bezeichnet. Wird der Lagersockel 22 in der ersten Umfangsrichtung 26 um die Sockelhochachse 25 verdreht, bewegen sich die Befestigungsschlitze 52 entlang eines zur Sockelhochachse 25 konzentrischen Kreisbogens 56, wobei die stirnseitigen Schlitzöffnungen 53 quasi vorauseilen.

Jeder Befestigungsschlitz 52 hat eine Längserstreckung, wobei er von längsseitigen Nutflanken und von einem der stirnseitigen Schlitzöffnung 52 entgegengesetzten hinteren stirnseitigen Randbereich 57 begrenzt ist. Der Abstand zwischen der stirnseitigen Schlitzöffnung 53 und dem diesbezüglich entgegengesetzten hinteren stirnseitigen Randbereich 57 definiert die Länge des Befestigungsschlitzes 52. Diese Länge ist bevorzugt größer als der Durchmesser des Gewindeschaftes 70 der zugeordneten Befestigungsschraube 24.

Die Befestigungsschlitze 52 sind bevorzugt in ihrer Längsrichtung gekrümmt und haben insbesondere eine kreisbogenförmig gekrümmte Längserstreckung. Die Innenseite der Krümmung, das heißt die konkave Längsseite des gekrümmten Befestigungsschlitzes 52, ist der Sockelhochachse 25 zugewandt. Jeder Befestigungsschlitz 52 erstreckt sich entlang des schon erwähnten Kreisbogens 56. Wenn, was bevorzugt der Fall ist, der radiale Abstand sämtlicher Befestigungsschlitze 52 zur Sockelhochachse 25 gleichgroß ist, liegen die gekrümmten Längsachsen sämtlicher Befestigungsschlitze 52 auf einem gemeinsamen Kreisbogen 56, dessen Zentrum auf der Sockelhochachse 25 liegt.

Die vorstehend beschriebene Ausgestaltung ermöglicht es, die Betätigungseinrichtung 3 an der Ventileinheit 2 zu befestigen, wenn die Befestigungsschrauben 24 an dem Ventilgehäuse 5 bereits vormontiert sind. Dies erleichtert die Handhabung, weil die Befestigungsschrauben 24 im noch nicht an das Ventilgehäuse 5 angesetzten Zustand des Lagersockels 22 wesentlich leichter in die Gewindebohrungen 69 einschraubbar sind, als wenn dies erst nach dem Ansetzen oder während des Ansetzvorganges des Lagersockels 22 geschehen würde.

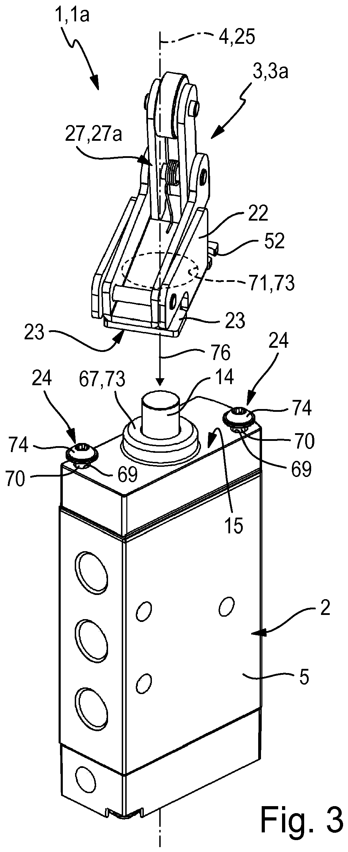

Die Figuren 3 bis 5 zeigen eine bevorzugte Verfahrensweise bei der Herstellung des Ventils 1, wobei es konkret um die Montage der Betätigungseinrichtung 3 geht.

In einem ersten Schritt werden, im noch nicht an die Ventileinheit 2 angesetzten Zustand der Betätigungseinrichtung 3, die Befestigungsschrauben 24 in die zur Montagefläche 15 ausmündenden Gewindebohrungen 69 eingeschraubt. Die gewählte Einschraubtiefe ist allerdings geringer als in der Spannposition. Die Befestigungsschrauben 24 werden nur bis zu einer Bereitschaftsposition eingeschraubt, deren Einschraubtiefe geringer ist als die Einschraubtiefe der Spannposition und in der der lichte Abstand zwischen dem Schraubenkopf 74 und der Montagefläche 15 größer ist als in der Spannposition.

Im nächsten Montageschritt wird die Betätigungseinrichtung 3 mit der unteren Sockelfläche 68 voraus im Rahmen einer linearen Ansetzbewegung 76 an die Montagefläche 15 angesetzt. Dies geschieht unter koaxialer Ausrichtung zwischen der Sockelhochachse 25 und der Längsachse 4, sodass der Lagersockel 22 mit seinem Zentrierloch 71 auf den Zentriervorsprung 67 aufgesteckt wird. Dieser Ansetzvorgang findet statt, während der Lagersockel 22 eine bezüglich der angestrebten Betriebsposition um die Sockelhochachse 25 verdrehte Ansetzposition einnimmt.

In dieser bezüglich der Betriebsposition verdrehten Ansetzposition nimmt der Lagersockel 22 bezüglich der Montagefläche 15 eine derart verdrehte Stellung ein, dass er bei der linearen Ansetzbewegung 76 nicht mit den Befestigungsschrauben 24 kollidiert. In diesem Zusammenhang ist es - was später noch ausgeführt wird - besonders vorteilhaft, wenn die Montagefläche 15 und der Fußabschnitt 23 einen länglichen Umriss haben. Der Lagersockel 22 kann daher beim Ansetzen gemäß Pfeil 76 zwischen den Schraubenköpfen 74 der bereits voreingeschraubten Befestigungsschrauben 24 hindurch an die Montagefläche 15 angesetzt werden.

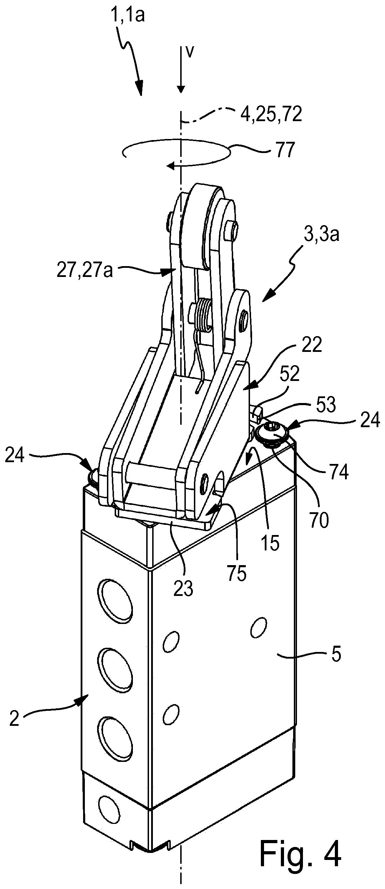

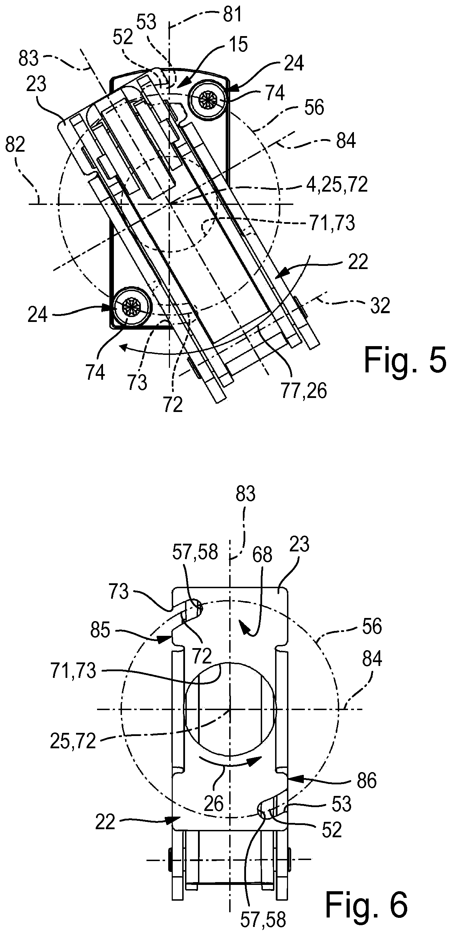

Der nächste Verfahrensschritt ist eine durch einen Pfeil illustrierte Drehbewegung 77, deren Richtungssinn mit der ersten Umfangsrichtung 26 zusammenfällt. Bei dieser in Figuren 4 und 5 angedeuteten Drehbewegung 77 wird der Fußabschnitt 23 mit seinen Befestigungsschlitzen 52 in den zwischen den Schraubenköpfen 74 und der Montagefläche 15 liegenden Bereich eingeführt. Dies geschieht mit vorauseilenden stirnseitigen Schlitzöffnungen 53. Der Fußabschnitt 23 wird also mit den die Befestigungsschlitze 52 aufweisenden Abschnitten unter die Schraubenköpfe 74 eingeführt, wobei gleichzeitig die Gewindeschäfte 70 durch die stirnseitigen Schlitzöffnungen 53 hindurch in den jeweils zugeordneten Befestigungsschlitz 52 eintauchen.

Der Drehwinkel für die Drehbewegung 77 wird so gewählt, dass der Lagersockel 22 zum Ende der Drehbewegung 77 den der Betriebsposition entsprechenden Drehwinkel bezüglich der Ventileinheit 2 einnimmt.

Nach dieser Drehpositionierung werden die Befestigungsschrauben 24 mittels eines Schraubwerkzeuges aus der Bereitschaftsposition in die Spannposition verdreht, sodass der Lagersockel 22 im Bereich seines Fußabschnittes 23 mit der Montagefläche 15 des Ventilgehäuses 5 verspannt ist. Nun ist das Ventil 1 betriebsbereit.

Das drehwinkelmäßige Positionieren des Lagersockels 22 in die Betriebsposition beim Verdrehen aus der Ansetzposition ist besonders einfach und exakt möglich, wenn die Länge der Befestigungsschlitze 52 so gewählt ist, dass die Befestigungsschlitze 52 in der Betriebsposition mit ihrem hinteren stirnseitigen Randbereich 57 an der Umfangsfläche des zugeordneten Gewindeschaftes 70 anliegen. Insofern fungieren diese hinteren stirnseitigen Randbereiche 57 der Befestigungsschlitze 52 als Anschlagflächen 58 zur Vorgabe der in der Betriebsposition zwischen dem Lagersockel 22 und der Ventileinheit 2 vorliegenden relativen Drehposition. Beim Ausführungsbeispiel ist dies der Fall.

Insbesondere wenn die Befestigungsschlitze 52 die vorstehend erläuterten Anschlagflächen 58 bilden, ist es vorteilhaft, wenn die erste Umfangsrichtung 26, in die die stirnseitigen Schlitzöffnungen 53 weisen, mit der Einschraub-Drehrichtung der Befestigungsschrauben 24 zusammenfällt, mit der die Befestigungsschrauben 24 in die Gewindebohrung 69 eingeschraubt sind. In diesem Fall verursacht die beim Festziehen der Befestigungsschrauben 24 zwischen den Schraubenköpfen 74 und der oberen Sockelfläche 75 hervorgerufene Reibung ein Drehmoment bezüglich des Lagersockels 22, das in der ersten Umfangsrichtung 26 orientiert ist, sodass der Lagersockel 22 mit seinen Anschlagflächen 58 an die Gewindeschäfte 70 angedrückt wird. Beim Festziehen der Befestigungsschrauben 24 ist somit eine sichere Fixierung des Lagersockels 22 in der Betriebsposition gewährleistet, ohne dass der Lagersockel 22 mittels externer Maßnahmen festgehalten werden müsste.

Bei der Drehbewegung 77 bildet die Sockelhochachse 25 die Drehachse 72. Auf diese Weise ist ein zielsicheres Einführen der Gewindeschäfte 70 in die Befestigungsschlitze 52 gewährleistet.

Die Montagefläche 15 hat zweckmäßigerweise einen länglichen Umriss mit einer Längsachse 81 und einer hierzu rechtwinkeligen Querachse 82. Zwei Gewindebohrungen 69 zur Aufnahme von Befestigungsschrauben 24 sind in sich bezüglich der Längsachse 4 diagonal gegenüberliegenden Eckbereichen der Montagefläche 15 angeordnet. Bevorzugt weist die Montagefläche 15 nur diese beiden Gewindebohrungen 69 auf.

Auch die untere Sockelfläche 68 sowie bevorzugt der zugeordnete Fußabschnitt 23 haben einen länglichen Umriss mit einer Längsachse 83 und einer dazu rechtwinkeligen Querachse 84. Wie bei der Montagefläche 15 ist der Umriss auch hier bevorzugt zumindest im Wesentlichen rechteckig gestaltet.

In der Betriebsposition sind die beiden Längsachsen 81, 83 parallel zueinander ausgerichtet, ebenso die beiden Querachsen 82, 84.

In dem Fußabschnitt 23 sind zwei Befestigungsschlitze 52 ausgebildet, die in zwei sich bezüglich der Sockelhochachse 25 diagonal gegenüberliegenden Eckbereichen der unteren Sockelfläche 68 ausgebildet sind. Bevorzugt weist der Fußabschnitt 23 nur diese beiden Befestigungsschlitze 52 auf.

Die beiden Befestigungsschlitze 52 sind auf einander entgegengesetzten Seiten der Querachse 84 angeordnet und derart ausgebildet, dass ihre stirnseitigen Schlitzöffnungen 53 zu den beiden einander entgegengesetzt in der Achsrichtung der Querachse 84 orientierten ersten und zweiten Randbereichen 85, 86 des Fußabschnittes 23 ausmünden. Genauer gesagt mündet die stirnseitige Schlitzöffnung 53 des einen Befestigungsschlitzes 52 zu dem ersten Randbereich 85 aus, während die stirnseitige Schlitzöffnung 53 des anderen, zweiten Befestigungsschlitzes 52 zu dem zweiten Randbereich 86 ausmündet. Die stirnseitigen Schlitzöffnungen 53 der beiden Befestigungsschlitze 52 sind dabei in Achsrichtung der Längsachse 83 der unteren Sockelfläche 68 mit Abstand zueinander angeordnet, wobei ihr Abstand zur Querachse 84 bevorzugt gleichgroß ist.

Auf diese Weise ist es möglich, den Lagersockel 22 in derart verdrehter Position mit der Ansetzbewegung 76 an die Montagefläche 15 anzusetzen, dass sich der Fußabschnitt 23 in Längsrichtung zwischen den beiden voreingeschraubten Befestigungsschrauben 24 erstreckt. Die beiden Längsachsen 83, 81 sind dabei in einem spitzen Winkel, insbesondere in einem Winkel von etwa 30° zueinander ausgerichtet.

Soll die Betätigungseinrichtung 3 im Falle einer Reparatur oder aus sonstigen Gründen von der Ventileinheit 2 wieder entfernt werden, kann dies mit Verfahrensschritten durchgeführt werden, die die umgekehrte Reihenfolge wie bei der Montage der Betätigungseinrichtung 3 haben.

## Patentansprüche

1. Mechanisch betätigbares Ventil, mit einer Ventileinheit (2), die ein Ventilgehäuse (5) aufweist und über eine unter Ausführung einer Umschaltbewegung (8) bezüglich des Ventilgehäuses (5) zwischen verschiedenen Schaltstellungen umschaltbare Ventilgliedanordnung (7) verfügt, die mit einem Antriebsabschnitt (14) aus dem Ventilgehäuse (5) herausragt, und mit einer Betätigungseinrichtung (3), die mit einem eine Betriebsposition einnehmenden Lagersockel (22) an eine Montagefläche (15) außen am Ventilgehäuse (5) angesetzt und mit dem Ventilgehäuse (5) verschraubt ist und die ein bezüglich des Lagersockels (22) bewegliches Betätigungselement (27) aufweist, das mechanisch zu einer Arbeitsbewegung (33) antreibbar ist, bei der es zum Hervorrufen der Umschaltbewegung (8) mit dem Antriebsabschnitt (14) der Ventilgliedanordnung (7) zusammenwirkt, wobei der Lagersockel (22) in Achsrichtung seiner zur Montagefläche (15) senkrechten Sockelhochachse (25) von mehreren um die Sockelhochachse (25) herum verteilten Befestigungsschlitzen (52) durchsetzt ist, durch die jeweils der in das Ventilgehäuse (5) eingeschraubte Gewindeschaft (70) einer Befestigungsschraube (24) hindurchgreift, die sich unter Einnahme einer Spannposition mit ihrem Schraubenkopf (74) neben dem Befestigungsschlitz (52) an einer oberen Sockelfläche (75) des Lagersockels (22) abstützt, wodurch der Lagersockel (22) mit seiner der oberen Sockelfläche (75) entgegengesetzten unteren Sockelfläche (68) mit der Montagefläche (15) verspannt ist, **dadurch gekennzeichnet, dass** jeder Befestigungsschlitz (52) an dem Lagersockel (22) eine stirnseitige Schlitzöffnung (53) aufweist, die in einer Umfangsrichtung (26) der Sockelhochachse (25) ausgerichtet ist, derart, dass der Lagersockel (22) bei seiner Montage an dem Ventilgehäuse (5) in einer um die Sockelhochachse (25) bezüglich der Betriebsposition verdrehten Ansetzposition an die Montagefläche (15) ansetzbar und anschließend in die Betriebsposition verdrehbar ist, wobei er beim Verdrehen in die Betriebsposition, mit den in der Drehrichtung orientierten stirnseitigen Schlitzöffnungen (53) voraus, mit den Befestigungsschlitzen (52) unter die Schraubenköpfe (74) der bereits weniger weit als bis zur Spannposition in das Ventilgehäuse (5) voreingeschraubten und dabei eine Bereitschaftsposition einnehmenden Befestigungsschrauben (24) einführbar ist.

2. Ventil nach Anspruch 1, **dadurch gekennzeichnet, dass** die Befestigungsschlitze (52) eine gekrümmte Längserstreckung haben, wobei ihre konkave Längsseite der Sockelhochachse (25) zugewandt ist.

3. Ventil nach Anspruch 2, **dadurch gekennzeichnet, dass** die Befestigungsschlitze (52) eine kreisbogenförmig gekrümmte Längserstreckung haben.

4. Ventil nach einem der Ansprüche 1 bis 3, **dadurch gekennzeichnet, dass** die stirnseitige Schlitzöffnung (53) jedes Befestigungsschlitzes (52) auf einem Kreisbogen (56) liegt, dessen Zentrum mit der Sockelhochachse (25) zusammenfällt, wobei zweckmäßigerweise die stirnseitigen Schlitzöffnungen (53) sämtlicher Befestigungsschlitze (52) gemeinsam auf dem gleichen Kreisbogen (56) liegen.

5. Ventil nach einem der Ansprüche 1 bis 4, **dadurch gekennzeichnet, dass** an dem Ventilgehäuse (5) und an dem Lagersockel (22) miteinander kooperierende Bestandteile (67, 71) einer Zentriereinrichtung (73) ausgebildet sind, die im an das Ventilgehäuse (5) angesetzten Zustand des Lagersockels (22) eine mit der Sockelhochachse (25) zusammenfallende Drehachse (72) definieren, um die der Lagersockel (22) relativ zum Ventilgehäuse (5) drehbar ist, solange die Befestigungsschrauben (24) ihre Bereitschaftsstellung einnehmen.

6. Ventil nach Anspruch 5, **dadurch gekennzeichnet, dass** die Zentriereinrichtung (73) ein an dem Lagersockel (22) ausgebildetes Zentrierloch (71) und einen an dem Ventilgehäuse (5) senkrecht von der Montagefläche (15) wegragend angeordneten, in das Zentrierloch (71) eintauchenden Zentriervorsprung (67) aufweist, wobei das Zentrierloch (71) und der Zentriervorsprung (67) zweckmäßigerweise kreisförmig konturiert sind.

7. Ventil nach einem der Ansprüche 1 bis 6, **dadurch gekennzeichnet, dass** der Lagersockel (22) einen die untere Sockelfläche (68) definierenden und von den Befestigungsschlitzen (52) durchsetzten Fußabschnitt (23) aufweist, der einen länglichen Umriss mit einer Längsachse (83) und einer dazu rechtwinkeligen Querachse (84) besitzt, wobei zwei Befestigungsschlitze (52) auf einander entgegengesetzten Seiten der Querachse (84) angeordnet sind, von denen die stirnseitige Schlitzöffnung (53) des einen Befestigungsschlitzes (52) zu einem in Achsrichtung der Querachse (84) orientierten ersten Randbereich (85) und die stirnseitige Schlitzöffnung (53) des anderen Befestigungsschlitzes (52) zu einem dem ersten Randbereich (85) entgegengesetzten zweiten Randbereich (86) des Fußabschnittes (23) ausmündet.

8. Ventil nach einem der Ansprüche 1 bis 7, **dadurch gekennzeichnet, dass** der Lagersockel (22) einen die untere Sockelfläche (68) definierenden und von den Befestigungsschlitzen (52) durchsetzten Fußabschnitt (23) aufweist, der einen zumindest im Wesentlichen rechteckigen Umriss mit vier zueinander rechtwinkeligen Randbereichen hat, wobei eine erste stirnseitige Schlitzöffnung (53) zu einem ersten Randbereich (85) und eine zweite stirnseitige Schlitzöffnung (53) mit Abstand dazu zu einem dem ersten Randbereich (85) entgegengesetzten zweiten Randbereich (86) des Fußabschnittes (23) ausmündet.

9. Ventil nach Anspruch 7 oder 8, **dadurch gekennzeichnet, dass** die Montagefläche (15) einen länglichen und zweckmäßigerweise zumindest im Wesentlichen rechteckigen Umriss hat, wobei zwei jeweils einen Gewindeschaft (70) einer Befestigungsschraube (24) aufnehmende Gewindebohrungen (69) in sich diagonal gegenüberliegenden Eckbereichen der Montagefläche (15) angeordnet sind.

10. Ventil nach einem der Ansprüche 7 bis 9, **dadurch gekennzeichnet, dass** der Fußabschnitt (23) des Lagersockels (22) plattenförmig ausgebildet ist.

11. Ventil nach einem der Ansprüche 7 bis 10, **dadurch gekennzeichnet, dass** der Lagersockel (22) mit genau zwei Befestigungsschrauben (24) am Ventilgehäuse (5) fixiert ist, die den Lagersockel (22) in sich diagonal gegenüberliegenden Eckbereichen des Fußabschnittes (23) durchsetzen.

12. Ventil nach einem der Ansprüche 1 bis 10, **dadurch gekennzeichnet, dass** die stirnseitigen Schlitzöffnungen (53) bezogen auf die Sockelhochachse (25) in der gleichen Umfangsrichtung (26) orientiert sind wie die Einschraub-Drehrichtung der Befestigungsschrauben (24) beim Einschrauben in das Ventilgehäuse (5).

13. Ventil nach einem der Ansprüche 1 bis 12, **dadurch gekennzeichnet, dass** die den stirnseitigen Schlitzöffnungen (53) entgegengesetzten hinteren stirnseitigen Randbereiche (57) der Befestigungsschlitze (52) Anschlagflächen (58) bilden, die beim Verdrehen des Lagersockels (22) mit den Gewindeschäften (70) der Befestigungsschrauben (24) zusammenwirken und dadurch die Betriebsposition des Lagersockels (22) drehwinkelmäßig vorgeben.

14. Ventil nach einem der Ansprüche 1 bis 13, **dadurch gekennzeichnet, dass** die Betätigungseinrichtung (3) eine Rollenhebel-Betätigungseinrichtung (3a) ist, deren Betätigungselement (27) von einem mit einer Betätigungsrolle (42) ausgestatteten, an dem Lagersockel (22) um eine Schwenkachse (32) verschwenkbar gelagerten Rollenhebel (27a) gebildet ist, der einen zu der Schwenkachse (32) beabstandeten Kraftabgabeabschnitt (37) aufweist, der zur Ausübung einer die Umschaltbewegung (8) hervorrufenden Umschaltkraft an dem Antriebsabschnitt (14) der Ventilgliedanordnung (7) anliegt.

15. Ventil nach Anspruch 14, **dadurch gekennzeichnet, dass** der Rollenhebel (27a) einen die Betätigungsrolle (42) tragenden Schwenkarm (44) aufweist, der mittels die Schwenkachse (32) vorgebenden Schwenklagermitteln (28) verschwenkbar an dem Lagersockel (22) gelagert ist und an dem der mindestens eine zu der Schwenkachse (32) beabstandete Kraftabgabeabschnitt (37) angeordnet ist, wobei die Betätigungsrolle (42) zweckmäßigerweise an einem schwenkbeweglich an dem Schwenkarm (44) gelagerten Kipparm (45) des Rollenhebels (27a) angeordnet ist, der federnd in eine bezüglich des Schwenkarmes (44) eingenommene Grundstellung vorgespannt ist.

16. Verfahren zur Herstellung eines mechanisch betätigbaren Ventils, wobei das Ventil (1) eine Ventileinheit (2) enthält, die ein Ventilgehäuse (5) aufweist und über eine unter Ausführung einer Umschaltbewegung (8) bezüglich des Ventilgehäuses (5) zwischen verschiedenen Schaltstellungen umschaltbare Ventilgliedanordnung (7) verfügt, die mit einem Antriebsabschnitt (14) aus dem Ventilgehäuse (5) herausragt, wobei das Ventil (1) ferner eine Betätigungseinrichtung (3) aufweist, die mit einem eine Betriebsposition einnehmenden Lagersockel (22) an eine Montagefläche (15) außen am Ventilgehäuse(5) angesetzt und mit dem Ventilgehäuse (5) verschraubt ist und die ein bezüglich des Lagersockels (22) bewegliches Betätigungselement (27) aufweist, das mechanisch zu einer Arbeitsbewegung (33) antreibbar ist, bei der es zum Hervorrufen der Umschaltbewegung (8) mit dem Antriebsabschnitt (14) der Ventilgliedanordnung (7) zusammenwirkt, wobei der Lagersockel (22) in Achsrichtung seiner zur Montagefläche (15) senkrechten Sockelhochachse (25) von mehreren um die Sockelhochachse (25) herum verteilten Befestigungsschlitzen (52) durchsetzt ist, durch die jeweils der in das Ventilgehäuse (5) eingeschraubte Gewindeschaft (70) einer Befestigungsschraube (24) hindurchgreift, die sich unter Einnahme einer Spannposition mit ihrem Schraubenkopf (74) neben dem Befestigungsschlitz (52) an einer oberen Sockelfläche (75) des Lagersockels (22) abstützt, wodurch der Lagersockel (22) mit seiner der oberen Sockelfläche (75) entgegengesetzten unteren Sockelfläche (68) mit der Montagefläche (15) verspannt ist,
**dadurch gekennzeichnet,**
- **dass** die Befestigungsschlitze (52) derart an dem Lagersockel (22) ausgebildet werden, dass jeder Befestigungsschlitz (52) an dem Lagersockel (22) eine stirnseitige Schlitzöffnung (53) aufweist, die in einer Umfangsrichtung (26) der Sockelhochachse (25) ausgerichtet ist,
- **dass** der Lagersockel (22) zunächst in einer um die Sockelhochachse (25) bezüglich der Betriebsposition verdrehten Ansetzposition an die Montagefläche (15) angesetzt wird und erst anschließend in die Betriebsposition verdreht wird, wobei er beim Verdrehen in die Betriebsposition, mit den in der Drehrichtung orientierten stirnseitigen Schlitzöffnungen (53) voraus, mit den Befestigungsschlitzen (52) unter die Schraubenköpfe (74) der Befestigungsschrauben (24) eingeführt wird, die zuvor bereits derart in das Ventilgehäuse (5) eingeschraubt wurden, dass sie eine weniger weit als bis zur Spannposition eingeschraubte Bereitschaftsposition einnehmen,
- und **dass** anschließend die Befestigungsschrauben (24) in die Spannposition verdreht werden, sodass sie an die die Befestigungsschlitze (52) begrenzenden Bereiche des Lagersockels (22) angedrückt werden und der Lagersockel (22) mit dem Ventilgehäuse (5) verspannt wird.

## Claims

1. Mechanically actuable valve with a valve unit (2), which has a valve housing (5) and is equipped with a valve member assembly (7), which is switchable between different switching positions while performing a switch-over movement (8) relative to the valve housing (5) and projects from the valve housing (5) with a drive section (14), and with an actuating device (3), which is fitted to the outside of the valve housing (5) at a mounting surface (15) with a bearing pedestal (22) adopting an operating position and bolted to the valve housing (5) and which has an actuating element (27), which is movable relative to the bearing pedestal (22) and can be driven mechanically to perform a working movement (33), in which it acts together with the drive section (14) of the valve member assembly (7) to cause the switch-over movement (3), wherein the bearing pedestal (22) is passed through in the axial direction of its pedestal vertical axis (25), which is perpendicular to the mounting surface (15), by a plurality of mounting slots (52), which are distributed around the pedestal vertical axis (25) and through which in each case the threaded shank (70) of a mounting screw (24) tightened into the valve housing (5) passes, which mounting screw (24) with its screw head (74) adjacent to the mounting slot (52) is supported on an upper pedestal surface (75) of the bearing pedestal (22) while adopting a clamping position, whereby the bearing pedestal (22) is clamped to the mounting surface (15) with its lower pedestal surface (68) opposite the upper pedestal surface (75), **characterised in that** each mounting slot (52) at the bearing pedestal (22) has an end-face slot opening (53), which is oriented in a circumferential direction (26) of the pedestal vertical axis (25) in such a way that the bearing pedestal (22), when being mounted on the valve housing (5), can be attached to the mounting surface (15) in an attaching position which is twisted around the pedestal vertical axis (25) in respect to the operating position and then twisted into the operating position, wherein it can be inserted, while being twisted into the operating position, with the end-face slot openings (53) leading, with the mounting slots (52) under the screw heads (74) of the mounting screws (24), which have already been pre-tightened into the valve housing (5) less far than the clamping position, adopting a standby position.

2. Valve according to claim 1, **characterised in that** the mounting slots (52) have a curved longitudinal dimension, their concave long side facing the pedestal vertical axis (25).

3. Valve according to claim 2, **characterised in that** the mounting slots (52) have a longitudinal dimension curved in the manner of a circular arc.

4. Valve according to any of claims 1 to 3, **characterised in that** the end-face slot opening (53) of each mounting slot (52) lies on a circular arc (56), the centre of which coincides with the pedestal vertical axis (25), wherein the end-face slot openings (53) of all mounting slots (52) expediently lie together on the same circular arc (56).

5. Valve according to any of claims 1 to 4, **characterised in that** mutually cooperating components (67, 71) of a centring device (73), which, when the bearing pedestal (22) is fitted to the valve housing (5), define an axis of rotation (72) coinciding with the pedestal vertical axis (25), about which the bearing pedestal (22) is rotatable relative to the valve housing (5) as long as the mounting screws (24) adopt their standby position, are formed on the valve housing (5) and on the bearing pedestal (22).

6. Valve according to claim 5, **characterised in that** the centring device (73) has a centring hole (71) formed on the bearing pedestal (22) and a centring projection (67) located on the valve housing (5), projecting at right angles from the mounting surface (15) and dipping into the centring hole (71), the centring hole (71) and the centring projection (67) expediently having a circular contour.

7. Valve according to any of claims 1 to 6, **characterised in that** the bearing pedestal (22) has a foot section (23), which defines the lower pedestal surface (68) and is passed through by the mounting slots (52), and which has an oblong outline with a longitudinal axis (83) and a transverse axis (84) perpendicular to the former, wherein two mounting slots (52) are located on opposite sides of the transverse axis (84), the end-face slot opening (53) of the one mounting slot (52) terminating towards a first edge region (85) oriented in the axial direction of the transverse axis (84) and the end-face slot opening (53) of the other mounting slot (52) terminating towards a second edge region (85) opposite the first edge region (85) of the foot section (23).

8. Valve according to any of claims 1 to 7, **characterised in that** the bearing pedestal (22) has a foot section (23), which defines the lower pedestal surface (68) and is passed through by the mounting slots (52), and which has an at least substantially rectangular outline with four edge regions perpendicular to one another, wherein a first end-face slot opening (53) terminates towards a first edge region (85) and a second end-face slot opening (53) terminates at a distance therefrom towards a second edge region (85) opposite the first edge region (85) of the foot section (23).

9. Valve according to claim 7 or 8, **characterised in that** the mounting surface (15) has an oblong and expediently at least substantially rectangular outline, wherein two threaded holes (69), each accommodating a threaded shank (70) of a mounting screw (24), are located in diagonally opposite corner regions of the mounting surface (15).

10. Valve according to any of claims 7 to 9, **characterised in that** the foot section (23) of the bearing pedestal (22) is designed to be plate -shaped.

11. Valve according to any of claims 7 to 10, **characterised in that** the bearing pedestal (22) is secured to the valve housing (5) by precisely two mounting screws (24), which pass through the bearing pedestal (22) in diagonally opposite corner regions of the foot section (23).

12. Valve according to any of claims 1 to 10, **characterised in that** the end-face slot openings (53) are, relative to the pedestal vertical axis (25), oriented in the same circumferential direction as the tightening direction of the mounting screws (24) when being tightened into the valve housing (5).

13. Valve according to any of claims 1 to 12, **characterised in that** the rear end-face edge regions (57) of the mounting slots (52) opposite the end-face slot openings (53) form stop surfaces (58), which act together with the threaded shanks (70) of the mounting screws (24) while the bearing pedestal (22) is being twisted, thereby predetermining the operating position of the bearing pedestal (22) in terms of its angle of rotation.

14. Valve according to any of claims 1 to 13, **characterised in that** the actuating device (3) is a roller lever actuating device (3a), the actuating element (27) of which is represented by a roller lever (27a), which is equipped with an actuating roller (42) and mounted on the bearing pedestal (22) for pivoting about a pivot axis (32), and which has a force output section (37), which is spaced from the pivot axis (32) and bears against the drive section (14) of the valve member assembly (47) for applying a switch-over force inducing the switch-over movement (8).

15. Valve according to claim 14, **characterised in that** the roller lever (27a) has a swivel arm (44), which carries the actuating roller (42) and is pivotably mounted on the bearing pedestal (22) by means of pivot bearing means (28) predetermining the pivot axis (32) and on which the at least one force output section (37) spaced from the pivot axis (32) is located, wherein the actuating roller (42) is expediently located on a tilting arm (45) of the roller lever (27a), which is pivotably mounted on the swivel arm (44) and which is preloaded resiliently towards a base position adopted relative to the swivel arm (44).

16. Method for producing a mechanically actuable valve, wherein the valve (1) has a valve unit (2) and is equipped with a valve member assembly (7), which is switchable between different switching positions while performing a switch-over movement (8) relative to the valve housing (5) and projects from the valve housing (5) with a drive section (14), wherein the valve (1) furthermore has an actuating device (3), which is fitted to the outside of the valve housing (5) at a mounting surface (15) with a bearing pedestal (22) adopting an operating position and bolted to the valve housing (5) and which has an actuating element (27), which is movable relative to the bearing pedestal (22) and can be driven mechanically to perform a working movement (33), in which it acts together with the drive section (14) of the valve member assembly (7) to induce the switch-over movement (8), wherein the bearing pedestal (22) is passed through in the axial direction of its pedestal vertical axis (25), which is perpendicular to the mounting surface (15), by a plurality of mounting slots (52), which are distributed around the pedestal vertical axis (25) and through which in each case the threaded shank (70) of a mounting screw (24) tightened into the valve housing (5) passes, which mounting screw (24) with its screw head (74) adjacent to the mounting slot (52) is supported on an upper pedestal surface (75) of the bearing pedestal (22) while adopting a clamping position, whereby the bearing pedestal (22) is clamped to the mounting surface (15) with its lower pedestal surface (68) opposite the upper pedestal surface (75),
**characterised in that**
- the mounting slots (52) are formed on the bearing pedestal (22) in such a way that each mounting slot (52) has at the bearing pedestal (22) an end-face slot opening (53), which is oriented in a circumferential direction (26) of the pedestal vertical axis (25),
- the bearing pedestal (22) is first attached to the mounting surface (15) in an attaching position which is twisted around the pedestal vertical axis (25) in respect to the operating position and then twisted into the operating position, wherein it is inserted, while being twisted into the operating position, with the end-face slot openings (53) oriented in the direction of rotation leading, with the mounting slots (52) under the screw heads (74) of the mounting screws (24), which have already been pre-tightened into the valve housing (5) in such a way that they adopt a standby position tightened less far than the clamping position,
- and the mounting screws (24) are then twisted into the clamping position, so that they are pressed against the regions of the bearing pedestal (22) which bound the mounting slots (52) and the bearing pedestal (22) is clamped to the valve housing (5).

## Revendications

1. Soupape à actionnement mécanique, avec une unité de soupape (2), qui présente un carter de soupape (5) et dispose d'un ensemble formant organe de soupape (7) pouvant être commuté entre différentes positions de commutation en exécutant un déplacement de commutation (8) par rapport au carter de soupape (5), qui dépasse par une section d'entraînement (14) du carter de soupape (5), et avec un dispositif d'actionnement (3), qui est placé par un socle de support (22) adoptant une position de fonctionnement, au niveau d'une surface de montage (15) côté extérieur au niveau du carter de soupape (5) et qui est vissé au carter de soupape (5) et qui présente un élément d'actionnement (27) mobile par rapport au socle de support (22), qui peut être entraîné de manière mécanique en un déplacement de travail (33), lors duquel il coopère avec la section d'entraînement (14) de l'ensemble formant organe de soupape (7) pour entraîner le déplacement de commutation (8), dans lequel le socle de support (22) est traversé dans la direction axiale de son axe vertical de socle (25) perpendiculaire à la surface de montage (15), par plusieurs entailles de fixation (52) réparties tout autour de l'axe vertical de socle (25), à travers lesquelles respectivement la tige filetée (70), vissée dans le carter de soupape (5) d'une vis de fixation (24) vient en prise par l'arrière, laquelle prend appui au niveau d'une surface de socle supérieure (75) du socle de support (22) en adoptant une position de serrage par sa tête de vis (74) à côté de l'entaille de fixation (52), ce qui permet d'assembler par serrage à la surface de montage (15) le socle de support (22) par sa surface de socle inférieure (68) opposée à la surface de socle supérieure (75), **caractérisée en ce que** chaque entaille de fixation (52) présente au niveau du socle de support (22) une ouverture d'entaille (53) côté frontal, qui est orientée dans une direction périphérique (26) de l'axe vertical de socle (25), de telle manière que le socle de support (22) peut être placé, lors de son montage au niveau du carter de soupape (5), dans une position de placement tournée autour de l'axe vertical de socle (25) par rapport à la position de fonctionnement, au niveau de la surface de montage (15) et peut être tourné immédiatement après dans la position de fonctionnement, dans laquelle il peut être introduit lors de la rotation dans la position de fonctionnement, au préalable avec les ouvertures d'entaille (53) côté frontal orientées dans la direction de rotation, avec les entailles de fixation (52) sous les têtes de vis (74) des vis de fixation (24) vissées au préalable déjà sur une distance plus petite que jusqu'à la position de serrage dans le carter de soupape (5) et adoptant ce faisant une position d'attente.

2. Soupape selon la revendication 1, **caractérisée en ce que** les entailles de fixation (52) ont une extension longitudinale incurvée, dans laquelle leur côté longitudinal concave est tourné vers l'axe vertical de socle (25).

3. Soupape selon la revendication 2, **caractérisée en ce que** les entailles de fixation (52) ont une extension longitudinale incurvée en forme d'arc de cercle.

4. Soupape selon l'une quelconque des revendications 1 à 3, **caractérisée en ce que** l'ouverture d'entaille (53) côté frontal de chaque entaille de fixation (52) se situe sur un arc de cercle (56), dont le centre coïncide avec l'axe vertical de socle (25), dans laquelle de manière appropriée les ouvertures d'entaille (53) côté frontal de toutes les entailles de fixation (52) se situent conjointement sur le même arc de cercle (56).

5. Soupape selon l'une quelconque des revendications 1 à 4, caractérisée en ce sont réalisés des éléments constitutifs (67, 71) d'un dispositif de centrage (73) coopérant les uns avec les autres au niveau du carter de soupape (5) et au niveau du socle de support (22), qui définissent dans l'état, placé au niveau du carter de soupape (5), du socle de support (22), un axe de rotation (72) coïncidant avec l'axe vertical de socle (25), autour duquel le socle de support (22) peut tourner par rapport au carter de soupape (5) tant que les vis de fixation (24) adoptent leur position d'attente.

6. Soupape selon la revendication 5, **caractérisée en ce que** le dispositif de centrage (73) présente un trou de centrage (71) réalisé au niveau du socle de support (22) et une partie faisant saillie de centrage (67) disposée de manière à dépasser de la surface de montage (15) de manière perpendiculaire au niveau du carter de soupape (5), s'enfonçant dans le trou de centrage (71), dans laquelle le trou de centrage (71) et la partie faisant saillie de centrage (67) sont entourés de manière appropriée de manière à présenter une forme de cercle.

7. Soupape selon l'une quelconque des revendications 1 à 6, **caractérisée en ce que** le socle de support (22) présente une section de base (23) définissant la surface de socle inférieure (68) et traversée par les entailles de fixation (52), qui possède un contour allongé avec un axe longitudinal (83) et un axe transversal (84) orthogonal par rapport à ce dernier, dans laquelle deux entailles de fixation (52) sont disposées sur des côtés opposés les uns aux autres de l'axe transversal (84), depuis lesquels l'ouverture d'entaille (53) côté frontal d'une entaille de fixation (52) débouche en direction d'une première zone de bord (85) orientée dans la direction axiale de l'axe transversal (84) et l'ouverture d'entaille (53) côté frontal de l'autre entaille de fixation (52) débouche en direction d'une deuxième zone de bord (86), opposée à la première zone de bord (85), de la section de base (23).

8. Soupape selon l'une quelconque des revendications 1 à 7, **caractérisée en ce que** le socle de support (22) présente une section de base (23) définissant la surface de socle inférieure (68) et traversée par les entailles de fixation (52), qui a un contour au moins sensiblement orthogonal avec quatre zones de bord orthogonales les unes par rapport aux autres, dans laquelle une première ouverture d'entaille (53) côté frontal débouche en direction d'une première zone de bord (85) et une deuxième ouverture d'entaille (53) côté frontal débouche à distance de cette dernière en direction d'une deuxième zone de bord (86), opposée à la première zone de bord (85), de la section de base (23).

9. Soupape selon la revendication 7 ou 8, **caractérisée en ce que** la surface de montage (15) a un contour allongé et de manière appropriée au moins sensiblement orthogonal, dans laquelle deux alésages filetés (69) recevant respectivement une tige filetée (70) d'une vis de fixation (24) sont disposés dans des zones d'angle, disposées en diagonale les unes en regard des autres, de la surface de montage (15).

10. Soupape selon l'une quelconque des revendications 7 à 9, **caractérisée en ce que** la section de base (23) du socle de support (22) est réalisée de manière à présenter une forme de plaque.

11. Soupape selon l'une quelconque des revendications 7 à 10, **caractérisée en ce que** le socle de support (22) est fixé au niveau du carter de soupape (5) avec précisément deux vis de fixation (24), qui traversent le socle de support (22) dans des zones d'angle, disposées en diagonale les unes en regard des autres, de la section de base (23).

12. Soupape selon l'une quelconque des revendications 1 à 10, **caractérisée en ce que** les ouvertures d'entaille (53) côté frontal sont orientées par rapport à l'axe vertical de socle (25) dans la même direction périphérique (26) que la direction de rotation de vissage des vis de fixation (24) lors du vissage dans le carter de soupape (5).

13. Soupape selon l'une quelconque des revendications 1 à 12, **caractérisée en ce que** les zones de bord (57) côté frontal arrière, opposées aux ouvertures d'entaille (53) côté frontal, des entailles de fixation (52) forment des surfaces de butée (58), qui coopèrent, lors de la rotation du socle de support (22), avec les tiges filetées (70) des vis de fixation (24) et spécifient ce faisant la position de fonctionnement du socle de support (22) conformément à l'angle de rotation.

14. Soupape selon l'une quelconque des revendications 1 à 13, **caractérisée en ce que** le dispositif d'actionnement (3) est un dispositif d'actionnement à levier à galet (3a), dont l'élément d'actionnement (27) est formé par un levier de galet (27a) équipé d'un galet d'actionnement (42), monté de manière à pouvoir pivoter autour d'un axe de pivotement (32) au niveau du socle de support (22), qui présente une section de production de force (37) espacée par rapport à l'axe de pivotement (32), qui repose au niveau de la section d'entraînement (14) de l'ensemble formant organe de soupape (7) pour exercer une force de commutation entraînant le déplacement de commutation (8).

15. Soupape selon la revendication 14, **caractérisée en ce que** le levier à galet (27a) présente un bras de pivotement (44) portant le galet d'actionnement (42), qui est monté au niveau du socle de support (22) de manière à pouvoir pivoter au moyen de moyens de palier de pivotement (28) spécifiant l'axe de pivotement (32) et au niveau duquel est disposée l'au moins une section de production de force (37) espacée par rapport à l'axe de pivotement (32), dans laquelle le galet d'actionnement (42) est disposé de manière appropriée au niveau d'un bras de basculement (45), monté de manière mobile par pivotement au niveau du bras de pivotement (44), du levier à galet (27a), qui est précontraint sur ressorts dans une position de base adoptée par rapport au bras de pivotement (44).

16. Procédé servant à fabriquer une soupape à actionnement mécanique, dans lequel la soupape (1) contient une unité de soupape (2), qui présente un carter de soupape (5) et dispose d'un ensemble formant organe de soupape (7) pouvant être commuté entre différentes positions de commutation en exécutant un déplacement de commutation (8) par rapport au carter de soupape (5), qui dépasse du carter de soupape (5) par une section d'entraînement (14), dans lequel la soupape (1) présente en outre un dispositif d'actionnement (3), qui est placé avec un socle de support (22) adoptant une position de fonctionnement au niveau d'une surface de montage (15) côté extérieur au niveau du carter de soupape (5) et est vissé au carter de soupape (5) et qui présente un élément d'actionnement (27) mobile par rapport au socle de support (22), qui peut être entraîné de manière mécanique en un déplacement de travail (33), dans lequel il coopère avec la section d'entraînement (14) de l'ensemble formant organe de soupape (7) pour entraîner le déplacement de commutation (8), dans lequel le socle de support (22) est traversé, dans la direction axiale de son axe vertical de socle (25) perpendiculaire par rapport à la surface de montage (15), par plusieurs entailles de fixation (52) réparties tout autour de l'axe vertical de socle (25), à travers lesquelles respectivement la tige filetée (70), vissée dans le carter de soupape (5), d'une vis de fixation (24) vient en prise, qui prend appui au niveau d'une surface de support supérieure (75) du socle de support (22) en adoptant une position de serrage par sa tête de vis (74) à côté de l'entaille de fixation (52), ce qui permet d'assembler par serrage le socle de support (22) par sa surface de socle inférieure (68) opposée à la surface de socle supérieure (75), à la surface de montage (15),
**caractérisé en ce**
- **que** les entailles de fixation (52) sont réalisées de telle manière au niveau du socle de support (22) que chaque entaille de fixation (52) présente au niveau du socle de support (22) une ouverture d'entaille (53) côté frontal, qui est orientée dans une direction périphérique (26) de l'axe vertical de socle (25),
- **que** le socle de support (22) est placé dans un premier temps au niveau de la surface de montage (15) dans une position de placement tournée autour de l'axe vertical de socle (25) par rapport à la position de fonctionnement et est tourné seulement après dans la position de fonctionnement, dans lequel il peut être introduit lors de la rotation dans la position de fonctionnement, au préalable avec les ouvertures d'entaille (53) côté frontal orientées dans la direction de rotation, avec les entailles de fixation (52) sous les têtes de vis (74) des vis de fixation (24), qui ont été vissées au préalable déjà de telle manière dans le carter de soupape (5) qu'elles adoptent une position d'attente vissée sur une distance plus petite que jusqu'à la position de serrage,
- et **qu'**immédiatement après les vis de fixation (24) sont tournées dans la position de serrage si bien qu'elles sont pressées contre les zones, délimitant les entailles de fixation (52), du socle de support (22) et le socle de support (22) est assemblé par serrage au carter de soupape (5).
